# EUROPÄISCHE PATENTSCHRIFT

(11) **EP 3 091 272 B1**
(45) Veröffentlichungstag und Bekanntmachung des Hinweises auf die Patenterteilung: **03.01.2018**
(21) Anmeldenummer: 15166417.4
(22) Anmeldetag: 05.05.2015
(51) Int. Cl.: F16P 3/14

(54) **LICHTGITTER**
LIGHT GRID
BARRIÈRE LUMINEUSE

(43) Veröffentlichungstag der Anmeldung: 09.11.2016
(73) Patentinhaber: SICK AG, 79183 Waldkirch (DE)
(72) Erfinder: Sigmund, Jörg, 79100 Freiburg (DE); Albert, Magnus, Dr., 79104 Freiburg (DE)

(56) Entgegenhaltungen:
- EP-A1- 1 879 044
- EP-A2- 1 329 739
- DE-A1- 4 340 756
- DE-U1-202007 014 917

## Beschreibung

Die vorliegende Erfindung betrifft ein Lichtgitter nach dem Oberbegriff von Anspruch 1.

Optische Sicherheitssensoren müssen eine Reihe von Selbsttestmöglichkeiten ihrer Messkette enthalten, um ihre Funktionsfähigkeit nachzuweisen und um gemäß einer Sicherheitsnorm eine bestimmte Sicherheitskategorie bzw. einen bestimmten Sicherheitslevel zu erreichen.

Je nach gewünschter Kategorie muss die Testung unterschiedlich tief gehen. Beispielsweise muss gemäß DIN EN 61496 ein Verlust der Detektionsfähigkeit in der Ansprechzeit und eine Einschränkung der Detektionsfähigkeit in vier Sekunden erkannt werden.

Heutige Sicherheitslichtgitter sind mit Sendern und Empfängern in getrennten Gehäusen ausgelegt. Als Detektionsprinzip dient die Unterbrechung des Lichtweges zwischen Sender und Empfänger.

Heutige sichere Lichtgitter und Lichtschranken mit gegenüberliegenden Sendern und Empfängern sind nach dem Ruhestromprinzip aufgebaut. Hierbei wird das Lichtsignal auf direktem Weg vom Sender zum Empfänger gesendet und durchläuft dabei eine komplette Messkette. Detektiert wird eine Unterbrechung dieses direkten Lichtwegs. Veränderungen des Empfangssignals, z. B. durch Frontscheibenverschmutzung, Senderdegradation, etc. zeigen sich dabei direkt in der Amplitudenhöhe des Empfangssignals und können direkt detektiert werden.

Da die sicherheitstechnische Entscheidung anhand einer Amplitudenschwelle erfolgt, kann jede kritische Verschlechterung im Messpfad erkannt und entsprechend ein Warn- oder Stoppsignal ausgegeben werden.

Die im Lichtgitter nach dem Stand der Technik verwendete Art der Selbsttestung nach dem Ruhestromprinzip ist bei freitastenden Lichtgittern/Lichttastern nicht anwendbar, da die direkte Gegenseite fehlt.

Bei freitastenden Systemen ist die Amplitude des Empfangssignals im Messkanal vor allem vom Abstand und der Remission des Targets abhängig, bzw. fehlt vollständig wenn der Sensor ins "Unendliche" schaut.

Bei den Lichtgittersystemen nach dem Stand der Technik müssen auf beiden Seiten des Schutzfeldes aktive Komponenten, nämlich Sender und Empfänger angebracht werden. Dies bedeutet hohen Verkabelungsaufwand, Platzbedarf und Einschränkungen bei der Anwendung.

Die EP 1 329 739 A2 offenbart eine Einrichtung zur Aufnahme eines Objektraums mit einem Sender, mindestens zwei Empfängern, wobei ein Empfänger durch eine Avalanche-Diode gebildet ist.

Eine Aufgabe der Erfindung besteht darin, ein tastendes Lichtgitter bzw. Sicherheitslichtgitter bereitzustellen, welches umfassende Möglichkeiten zur Selbsttestung aufweist, um eine hohe Sicherheitskategorie zu erhalten. Zudem soll durch eine hohe Integration eine kostenattraktive Realisierung ermöglicht werden.

Die Aufgabe wird gemäß Anspruch 1 gelöst durch ein Lichtgitter nach dem Lichtlaufzeitprinzip mit mindestens einem Lichtsender, der Lichtsignale in einen Messbereich aussendet und mit mindestens einem Lichtempfänger, welcher die aus dem Messbereich zurückgeworfenen Lichtsignale aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtsignals bzw. der Lichtsignale ein für den Abstand von Objekten zum Lichtgitter repräsentatives Abstandssignal ermittelt, wobei der Lichtempfänger mindestens eine Einzelphotonenlawinendiode aufweist.

Einzelphotonenlawinendioden werden auch synonym als 'Single Photon Avalanche Diode' kurz SPAD bezeichnet. Andere gängige Bezeichnungen sind ,Silicon Photomultiplier' (SiPM),, 'Geigermode Avalanche Photon Diode' oder 'Single Photon Counting Diode'. Einzelphotonenlawinendioden sind in Standard CMOS-Technologie realisierbare photoempfindliche Detektoren, die ähnlich wie Avalanche Photo Dioden einfallende Photonen in Strompulse konvertieren. Im Gegensatz zu Avalanche Photo Dioden werden Einzelphotonenlawinendioden jedoch über einer Durchbruchspannung betrieben. Damit löst bereits ein einzelnes einfallendes Photon einen Lawineneffekt aus, der als Strompuls detektiert werden kann. Verstärkungsfaktoren von 10⁵ bis 10⁶ ermöglichen eine hohe Sensitivität und damit die Detektion bereits einzelner Photonen.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, indem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Hierbei handelt es sich um ein Lichtgitter nach dem Lichtlaufzeitprinzip mit mindestens einem Lichtsender, der aufeinanderfolgende Lichtimpulse in einen Messbereich aussendet und mit mindestens einem Lichtempfänger, welcher die aus dem Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand von Objekten zum Lichtgitter repräsentatives Abstandssignal ermittelt, wobei der Lichtempfänger mindestens eine Einzelphotonenlawinendiode aufweist.

Weiter können auch bekannte Phasenmessverfahren eingesetzt werden, bei denen ein moduliertes Lichtsignal verwendet wird. Bei diesen Verfahren werden beispielsweise über ein Gating-Signal die Einzelphotonenevents in zwei Zähler verteilt und aus dem Verhältnis der Zählerstände eine Phase berechnet.

Weiter können analoge Signale der Einzelphotonendiode ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung. Durch den Amplitudenwert kann eine Plausibilitätsprüfung, insbesondere bei sicherheitstechnischen Anwendungen durchgeführt werden.

Das erfindungsgemäße Lichtgitter hat den Vorteil, dass dieses kompakt ausgestaltet ist und in einem kleinen Gehäuse untergebracht werden kann.

Die Verwendung von Einzelphotonenlawinendioden bietet folgende Vorteile: Einzelphotonenlawinendioden sind in einem Standard CMOS Prozess herstellbar. Damit ist das Lichtgitter hoch integrierbar, z. B. unter Verwendung von ASIC Bausteinen. Der Lichtsender, beispielsweise ein VSCEL, eine Laserdiode oder eine Leuchtdiode und die Steuer- und Auswerteeinheit bzw. eine getrennte Lichtsenderansteuerung sind ebenfalls auf dem Chip integrierbar.

Das Lichtgitter ist kostengünstiger als bisher in der Sicherheitstechnik übliche Lichtgitter mit photoempfindlichen Empfängern. Durch Mehrfachanordnung von Lichttastern, bestehend aus mindestens einem Lichtsender und mindestens einem Lichtempfänger sind sehr kompakte Systeme möglich. Durch die Verwendung von Einzelphotonenlawinendioden ist eine hohe Empfindlichkeit bis zu einzelnen Photonen gegeben. Dadurch kann eine optionale Optik sehr kompakt ausgeführt werden.

Gemäß der Erfindung ist eine Temperaturkompensation der Lichtlaufzeitauswertung oder eine Temperaturregelung der Einzelphotonenlawinendioden-Vorspannung im Lichtgitter möglich. Die Vorspannung der einzelnen Einzelphotonenlawinendioden wird vorzugsweise temperaturabhängig geregelt werden, um diese im Arbeitsbereich des Geigermodes zu halten. Die Logik für die Regelung ist bevorzugt mit integriert. Weiter sind zum Betrieb des Einzelphotonenlawinendioden-Empfängers im Lichtgitter nur Spannungen kleiner 50V und keine Hochspannungen notwendig. Weiter ist durch eine Auswertung von Abstand und Signalpegel eine Plausibilisierung möglich.

Der Lichtsender ist dabei optional in einer ersten Gehäusekammer und der Lichtempfänger in einer zweiten benachbarten Gehäusekammer angeordnet. Die Gehäusekammern sind optisch isoliert, so dass keine direkte optische Verbindung zwischen Lichtsender und Lichtempfänger vorhanden ist. Lediglich an einem Objekt reflektiertes bzw. remittiertes Licht des Lichtsenders gelangt auf den Lichtempfänger.

Das Lichtgitter weist ein Gehäuse auf und mehrere Lichttaster sind über Verbindungsleitungen miteinander verbunden.

In Weiterbildung der Erfindung ist eine Referenzfläche vorgesehen, wobei die Lichtsignale bzw. Lichtimpulse des Lichtsenders auf die Referenzfläche treffen und die zurückgeworfenen Lichtsignale bzw. Lichtimpulse auf den Lichtempfänger treffen. Jedoch kann optional auch eine bereits vorhandene Kontur als Referenzfläche dienen.

Das Lichtgitter muss nur an einer Seite des Messbereichs bzw. Schutzfeldes angeordnet und verkabelt werden. Jeder aus einem Lichtsender und Lichtempfänger bestehende Messkanal bzw. Lichttaster misst über die Lichtlaufzeit den Abstand zu einem möglichen Objekt sowie optional die Signalamplitude, welche von diesem zurückgestreut wird.

Die Schutzfelddimensionen bzw. Messbereichsdimensionen können auf zwei Arten definiert werden.

Erstens können die Abstände und Signalamplituden gegenüber einer natürlichen Referenzfläche eingelernt werden. Hierbei misst das Lichtgitter gegenüber diesen eingelernten Werten jede Abweichung, nämlich zu große oder zu kleine Abstände, oder zu große oder zu kleine Signalamplituden führen zu einer Schutzfeldverletzung und zu einem Objektfeststellungssignal.

Eine sicherheitsgerichtete Testung des Lichtgitters ist einfacher als im Stand der Technik, da beim Messwert mit zwei unterschiedlichen Erwartungswerten gearbeitet wird. Jegliche Abweichung durch eine Fehlmessung oder einen Umgebungseinfluss des Lichtgitters, beispielsweise Alterung des Lichtsenders, Fremdlichteinfluss und/oder Verschmutzung führt zu einem abweichenden Messwert entweder bei der Überwachung der Amplitude oder des Abstandes.

Zweitens können die Abstände für jeden Messkanal mit einer entsprechenden Software konfiguriert werden. Hierbei misst das Lichtgitter freitastend in den Raum und jedes Unterschreiten des konfigurierten Abstandswertes führt zu einer Schutzfeldverletzung. Dabei lassen sich variable Schutzfeldgeometrien verwirklichen, welche auch durch Schutzfeldumschaltung, beispielsweise Muting oder Blanking z. B. in einem Taktbetrieb verändert werden können. Die sicherheitsgerichtete Sensortestung ist in diesem Fall schwieriger, da nicht von Erwartungswerten ausgegangen werden kann.

In Weiterbildung der Erfindung ist eine Retroreflektorfläche vorgesehen, wobei die Lichtsignale bzw. Lichtimpulse des Lichtsenders auf die Retroreflektorfläche treffen und die zurückgeworfenen Lichtsignale bzw. Lichtimpulse auf den Lichtempfänger treffen.

Mindestens ein Lichttaster, bestehend aus einem Lichtempfänger und einem Lichtsender, werden dabei auf einer Seite des Überwachungsbereichs angeordnet. Auf der gegenüberliegenden Seite wird der Retroreflektor angeordnet. Der Retroreflektor ist beispielsweise ein Trippelreflektor. Der Retroreflektor weist beispielsweise eine Abmessung von ca. 80 mm x 80 mm auf. Jedoch sind auch andere Geometrien und Abmessungen denkbar.

Bei geeigneten Öffnungswinkeln des Lichtsenders und des Lichtempfängers des Lichttasters ist dabei auch die gleichzeitige Überwachung mehrerer Retroreflektoren mit einem Lichttaster möglich.

Da das zurückgestreute Lichtsignal eines Retroreflektors in der Regel deutlich höher ist als das von der sonstigen Umgebung remittierte Licht, können Lichtsender und/oder Lichtempfänger ohne zusätzliche Kollimationsoptik betrieben werden. Insbesondere für größere Reichweiten und zur Verbesserung des Messverhaltens bei Fremdlicht können die Öffnungswinkel von Lichtsender und Lichtempfänger durch zusätzliche Optiken eingeschränkt werden.

Der Abstand zum Retroreflektor sowie der am Lichtempfänger gemessene Signalpegel werden beispielsweise bei der Inbetriebnahme eingelernt.

Durch kurze Unterbrechungen des Messzyklus ist es möglich, mittels des Lichtempfängers auch einen Pegel durch Fremdlichteinstrahlung zu bestimmen. Dabei können bei der Messung des Signalpegels Schwankungen auf längere Zeitskalen, beispielsweise durch Temperaturänderungen oder durch Veränderungen des Umgebungslichts, kontinuierlich protokolliert und die Sollwerte entsprechend abgeglichen werden.

Beispielsweise ist bei dem Lichtgitter jedem Lichttaster gegenüberliegend ein Retroreflektor zugeordnet. Der Retroreflektor kann dabei auch beweglich angeordnet sein, beispielsweise an einem Schiebetor. Die Detektion von Objekten ist weiterhin möglich, solange die Bewegung des Retroreflektors wesentlich langsamer ist als typische Objektbewegungen, die detektiert werden sollen.

Weiter können auch Umlenkspiegel zwischen Lichttaster bzw. Lichtgitter und Retroreflektor angeordnet werden, um Überwachungsbereiche über eine oder mehrere Ecken zu realisieren.

Durch die Überwachung von sowohl Abstandswert als auch Signalpegel können Phasenlage-Verfahren auch jenseits des Eindeutigkeitsbereichs verwendet werden, solange eine energetische Detektion des Retroreflektors möglich ist.

In Weiterbildung der Erfindung bilden ein erster Lichtempfänger mit einem ersten Lichtsender einen ersten Lichttaster und der erste Lichtempfänger mit einem zweiten Lichtsender einen zweiten Lichttaster, wobei der erste Lichtsender und der zweite Lichtsender nacheinander aktivierbar sind.

Bei Lichtgittern nach dem Stand der Technik wird die geometrische Auflösung durch den Strahlabstand vorgegeben. Bei dem erfindungsgemäßen tastenden Lichtgitter wird der Abstand der kollimierten Lichtsender zur Definition der geometrischen Auflösung verwendet.

Um Kosten zu sparen kann bei dem tastenden Lichtgitter ein einziger Lichtempfänger zeitlich seriell für die Auswertung von zwei oder mehreren ihm benachbarten Lichtsendern verwendet werden. Hierdurch lässt sich ein Teil der Lichtempfänger einsparen. Die Empfangskeule des Lichtempfängers deckt dabei beide Lichtsender ab.

In einer weiteren Ausführungsform bilden ein erster Lichtempfänger mit einem ersten Lichtsender einen ersten Lichttaster und ein zweiter Lichtempfänger mit dem ersten Lichtsender einen zweiten Lichttaster.

Dies bietet eine weitere Möglichkeit für eine höhere Detektionssicherheit in dem Lichtgitter durch eine parallele Auswertung von zwei benachbarten Lichtempfängern, die von einem einzigen Lichtsender Lichtimpulse erhalten. Hierdurch kann eine Redundanz im gesamten Lichtgitter erreicht werden.

In einer weiteren Ausführungsform sind mehrere, nicht benachbarte Lichtsender gleichzeitig aktivierbar.

Um eine niedrige Ansprechzeit zu erreichen, können mehrere Lichttaster parallel betrieben werden, bevorzugt in einer Anordnung ohne Überlappung von Sendekeulen bzw. Empfangskeulen. Beispielsweise werden beanstandete Lichttaster mit einem Abstand von z. B. 5 bis 10 Lichttastern gleichzeitig aktiviert. Ein direkt benachbarter Lichttaster wird in einem Zeitmultiplexbetrieb danach aktiviert. Innerhalb örtlicher Gruppen wird also in einem Zeitmultiplex jede Abstandsmesseinheit nacheinander durchgemessen. Hierdurch wird erreicht, dass mit zunehmender Länge eines Lichtgitters die Ansprechzeit niedrig bleibt.

In Weiterbildung der Erfindung weisen unterschiedliche Lichtsender unterschiedliche Pulswiederholfrequenzen, Modulationsfrequenzen oder unterschiedliche Phasen auf.

Dadurch können benachbarte Lichttaster parallel gleichzeitig aktiviert werden, ohne dass ein Übersprechen zwischen den Kanälen auftreten kann.

In Weiterbildung der Erfindung weist der Lichtempfänger mindestens ein Array bestehend aus Einzelphotonenlawinendioden auf.

Damit der Lichtempfänger mit der mindestens einen Einzelphotonenlawinendiode nicht bereits durch einzelne Photonen gesättigt wird, z. B. durch Fremdlicht, werden viele Einzelphotonenlawinendioden angeordnet und zusammen ausgewertet. Prinzipiell können hier die Analogsignale der Einzelphotonenlawinendioden-Pixel bzw. Einzelphotonenlawinendioden-Elemente addiert werden. Es ist auch möglich, die Lawinen jeder Einzelphotonenlawinendiode beispielsweise über einen Komparator oder über einen Analog-Digital-Wandler zu digitalisieren und digital auszuwerten. Jedoch können die Lawinensignale auch direkt digital weiterverarbeitet werden, fass das Signal bereits ausreichend hoch ist.

Um die Möglichkeit eines größeren Winkelbereichs durch das Lichtgitter abzudecken und dennoch die nötige räumliche Auflösung zur Detektion z. B. eines Beines zu erhalten, kann das Einzelphotonenlawinendioden-Array in sogenannte Makropixel aufgeteilt werden. Hierbei sind mehrere räumlich benachbarte Einzelphotonenlawinendioden-Zellen einer gemeinsamen Auswertung zugehörig und werten über eine entsprechende Optik das empfangene Licht aus einem bestimmten Winkelbereich aus. Die Anordnung kann dabei linear oder flächig erfolgen.

Die Dynamik und/oder das Fremdlichtverhalten ist über die verschiedenen Einzelphotonenlawinendioden bzw. Einzelphotonenlawinendioden-Arrays skalierbar.

Der Signalpegel kann bei Einzelphotonenlawinendioden-Arrays entweder direkt über die Zählraten der Photonen bestimmt werden, falls die Signale direkt auf Pixelebene digitalisiert werden oder über die Messung der Amplitude des Summenstroms aller Pixel. Im Überwachungszustand werden beide Werte kontinuierlich gemessen und mit dem eingelernten Sollwert verglichen. Treten bei einem der beiden Werte Abweichungen auf, wird diese Abweichung über den zweiten Messwert plausibilisiert und gegebenenfalls als Eingriff detektiert.

In einer Ausführungsform der Erfindung ist dem Lichtsender eine Sendeoptik, insbesondere eine Linse, vorgeordnet. Die Sendeoptik ist optional auf einem Chip oder in dem Chipgehäuse integriert, um eine kostengünstige und kompakte Lösung, insbesondere bei hohen Stückzahlen, zu erreichen.

Durch eine hohe Integration und eine geringe Größe der Senderoptik ist das Lichtgitter sehr kompakt.

Durch unterschiedliche Sendeoptiken können verschiedene Überwachungswinkel und verschiedene Reichweiten realisiert werden.

In einer weiteren Ausführungsform ist dem Lichtempfänger eine Empfangsoptik, insbesondere eine Linse, vorgeordnet.

Die Empfangsoptik ist optional auf einem Chip oder in dem Chipgehäuse integriert, um eine kostengünstige und kompakte Lösung, insbesondere bei hohen Stückzahlen, zu erreichen.

Auch ein optischer Bandpassfilter kann direkt auf dem Chip oder dem Lichtempfänger angeordnet, insbesondere aufgedampft werden, um Hintergrundlicht abzuschwächen.

Durch eine hohe Integration und eine geringe Größe der Empfängeroptik ist das Lichtgitter sehr kompakt.

Durch unterschiedliche Empfangsoptiken können verschiedene Überwachungswinkel und verschiedene Reichweiten realisiert werden.

In Weiterbildung der Erfindung ist ein weiterer Lichtempfänger als Referenzlichtempfänger als zweiter Empfangskanal zur sicherheitsgerichteten Selbsttestung vorgesehen.

Der Referenzlichtempfänger ist in derselben Gehäusekammer angeordnet wie der Lichtsender und ist durch eine Kanaltrennung vom Lichtempfänger getrennt. Der Referenzlichtempfänger kann dabei identisch zum Lichtempfänger ausgebildet sein. Insbesondere kann es sich bei dem Referenzlichtempfänger um ein Einzelphotonenlawinendioden-Array handeln.

Der Referenzlichtempfänger ermöglicht folgende Selbsttestungen.

Erstens kann über Streulicht innerhalb der Gehäusekammer des Lichttasters im Referenzlichtempfänger die Leistung, insbesondere Laserleistung des Lichtsenders in jedem Messzyklus überwacht werden. Große Abweichungen oder ein Ausfall des Lichtsenders können so erkannt werden.

Zweitens kann das genaue Zeitverhalten bzw. Timing des Lichtsenders überwacht werden und eventuell auftretende Offsets können korrigiert werden, z. B. bei Temperatureinflüssen.

Drittens kann eine verschmutzte Frontscheibe des Lichtgitters über eine Änderung des Frontscheibenechos durch Rückstreuung an den Schmutzpartikeln auf der Frontscheibe detektiert werden.

Viertens sind Manipulationsversuche ebenfalls über die Rückstreuung zum Referenzlichtempfänger erkennbar, auch wenn der Lichtempfänger kein Signal erhält.

Fünftens kann in den Phasen, in denen kein Licht ausgesendet wird, an dem Referenzlichtempfänger der Fremdlichtpegel gemessen werden. Das entsprechende Messsignal kann mit dem Signal des Lichtempfängers verglichen werden, wodurch die Sensitivität des Lichtempfängers verifiziert werden und mit optionaler anderer Skalierung zur Überprüfung des nötigen Signal-Rausch Abstandes im eigentlichen Messkanal herangezogen werden kann.

Zusätzliche Messwerte, welche auf dem Lichtempfänger und dem Referenzlichtempfänger erzeugt werden, erlauben eine sicherheitstechnische Bewertung der Funktionstüchtigkeit.

Eine direkte Messung des Fremdlichtpegels auf dem Lichtempfänger und ggf. auf dem Referenzlichtempfänger ermöglichen eine gute Bestimmung des Signal-Rausch-Verhältnisses und eine sicherheitsgerichtete Empfindlichkeit des Systems.

In Weiterbildung der Erfindung ist ein weiterer Lichtsender als Referenzlichtsender zur sicherheitsgerichteten Selbsttestung vorgesehen.

Weiter kann auch ein Referenzlichtsender als zweiter Lichtsender vorgesehen werden.

Der Referenzlichtsender kann zur Testung des Lichtempfängers in der Gehäusekammer des Lichtempfängers integriert werden. Hierdurch kann eine Testung des Empfangskanals auf das Zeitverhalten bzw. Timing sowie signalhöhenabhängige Effekte durchgeführt werden. Der Referenzlichtsender ist hier bevorzugt nahe am Lichtempfänger angebracht und kann beispielsweise ebenfalls in CMOS integriert werden.

Aufgrund der räumlichen Nähe lässt sich der zusätzliche Referenzlichtsender mit einem leistungsschwächeren und damit kostengünstigeren Lichtsender realisieren. Die Sendeleistung des Referenzlichtsenders wird so eingestellt, dass die Signalhöhe den tatsächlichen Empfangssignalen des Lichtempfängers entspricht. Gleiches gilt für den zeitlichen Verlauf des Sendesignals des Referenzlichtsenders.

Zur Testung des Lichtempfängers können optische Testpulse mit unterschiedlichen zeitlichen Verläufen und Amplituden verwendet und über ein steuerbares Delay relativ zum Startzeitpunkt der Messung eine Lichtlaufzeit imitiert werden.

Insbesondere Übersteuerungsmessungen lassen sich auf diese Art leicht durchführen. Über eine programmierbare variable Verzögerung vor dem Lichtsender lässt sich das Zeitverhalten, also das Timing der Entfernungsmesskette, testen.

Über eine einstellbare Signalhöhe des Lichtsenders lässt sich die Dynamik des Lichtempfängers testen. Der Referenzlichtsender lässt sich mit einer leistungsschwächeren und damit kostengünstigeren Sendediode aufbauen, da aufgrund der räumlichen Nähe eine geringere Sendeleistung ausreicht, um vergleichbare Signale auf dem Empfänger zu erzeugen.

Damit ermöglicht der Referenzlichtsender folgende Testungen:
Erstens kann eine Linearität und eine Integrität der Empfangssignale des Lichtempfängers für verschiedene Verzögerungen bzw. Lichtlaufzeiten gewährleistet werden. Damit kann indirekt die Abstandsmessung überprüft werden.

Zweitens kann durch Messung der Signalhöhe mit unterschiedlichen Referenzamplituden des Referenzsenders die Dynamik und die Sensitivität des Lichtempfängers überprüft werden. Die Messungen können auch zur Kompensation von Alterungseffekten oder Degradation oder zur Kompensation von Temperatureffekten verwendet werden.

Drittens können z. B. bei Bedarf Übersteuerungsmessungen durchgeführt werden.

In Weiterbildung der Erfindung ist die Steuer- und Auswerteeinheit zweikanalig ausgebildet.

Durch die zweikanalige Steuer- und Auswerteeinheit kann das Lichtgitter als eigenständiger Sicherheitssensor bzw. Sicherheitslichtgitter auch bei höheren Anforderungen an das zu erreichende Sicherheitsniveau verwendet werden.

Dadurch ist das Lichtgitter selbst in der Lage, eine Vielzahl von Selbsttests durchzuführen und seine eigene Funktionalität umfassend sicher zu stellen.

Weiter können aber auch mehrere Lichttaster über einen gemeinsamen Bus kommunizieren und ein zentraler Sicherheitskontroller bzw. Safetycontroller wird verwendet, um die einzelnen Lichttaster zu konfigurieren, ihren Zustand abzufragen und gegebenenfalls geeignete Testsignale einzuspeisen, die empfangenen Signale auszuwerten und abzugleichen, Warnungen zu signalisieren und im Gefährdungsfall eine abzusichernde Maschine oder ein abzusicherndes selbstfahrendes Fahrzeug anzuhalten.

Es kann beispielsweise ausreichen, wenn jeder einzelne Lichttaster auf dem gemeinsamen Bus lediglich meldet, wenn seine Messwerte zuvor eingelernte Schwellen verletzen bzw. überschreiten oder bei einer Selbstdiagnose ein Problem diagnostiziert hat.

In Weiterbildung der Erfindung ist ein Lagesensor zur Auswertung der Sensorlage des Lichtgitters vorgesehen. Insbesondere ist eine sicherheitsrelevante Ausrichtung des Lichtgitters vorgesehen.

Ist das Lichtgitter vom Anwender positioniert und überwacht den gewünschten Bereich, kann es notwendig sein, diese Position des Überwachungsbereichs zu kontrollieren, um z. B. eine Dejustage des Sensors durch mechanische Einwirkungen zu erkennen. Beispielsweise wird als Lagesensor ein MEMS-Lagesensor verwendet. MEMS steht für Mikro-Elektro-Mechanisches System.

Diese Lagesensoren sind heute dank hoher Stückzahlen in Consumer- und Automotivebereichen sehr günstig verfügbar und hochintegriert. Nachdem die Position einmal eingelernt wurde, erkennt der Lagesensor jede Veränderung und ein nachgeschalteter Sicherheitskontroller bzw. Safetycontroller bzw. eine nachgeschaltete Sicherheitssteuerung wertet die Positionssignale aus, falls sich durch eine Dejustage ein Sicherheitsproblem ergibt.

Zudem kann der Lagesensor als Ausrichthilfe bzw. elektronische Wasserwaage dienen, was insbesondere bei der Justage eines Sensorsystems bzw. Lichtgitters hilfreich ist.

In Weiterbildung der Erfindung ist der Lichttaster ein integriertes Lichttastermodul.

Durch die Verwendung eines CMOS-Prozesses ist es möglich, zusätzliche Komponenten wie die Steuer- und Auswerteeinheit, den Lasertreiber, die Spannungsversorgung und/oder eine Temperaturregellogik zusammen mit dem photoempfindlichen Empfänger auf einem Chip zu integrieren. Mit dieser Technologie lassen sich alle Komponenten der Messkette des Lichttasters in einem einzigen ASIC integrieren. Der ASIC ist in der Lage, eigenständig Entfernungswerte zu messen und das Endergebnis über einen geeigneten Bus an die zentrale Steuerung weiterzugeben.

Mittels einer Hybridtechnologie lässt sich auch der Lichtsender, beispielsweise ein Laser, eine VCSEL oder eine Leuchtdiode mit auf dem integrierten Lichttastermodul, dem Chip integrieren. Auch der Referenzlichtempfänger und/oder der Referenzlichtsender können in dem integrierten Lichttastermodul vorgesehen werden.

Interessant für einen Sicherheitssensor ist die Möglichkeit einer Hintergrundlichtmessung im Einzelphotonenlawinendioden-Array. Das Fremdlicht ist bei einer Einzelphotonenlawinendiode über das ,Shot-Noise' eine dominierende Rauschquelle. Das thermische Rauschen ist gegenüber klassischen Photodioden-Empfängern deutlich kleiner, da der im klassischen Empfangspfad übliche Transimpedanzwandler, der eine Hauptquelle für thermisches Rauschen darstellt, nicht benötigt wird.

Auf dem Einzelphotonenlawinendioden-Array lässt sich in den Sendepausen des Messsystems der Fremdlichtpegel über die Anzahl der einfallenden Fremdlichtphotonen auf dem Lichtempfänger bestimmen. Z. B. im Fall des angeführten PhasenmessVerfahren durch ein weiteres Gatingsignal, welches in den entsprechenden Sendepausen die Einzelphotonenevents in einem Zähler aufaddiert.

Für eine sichere Detektion von Objekten in einem sicheren Lichtgitter kann zuvor ein nötiges Signal-Rausch-Verhältnis definiert werden, bei welchem unter allen Umständen ein Objekt erkannt werden muss. Durch die Bestimmung des Fremdlichtpegels während des Messzyklus' kann überwacht werden, ob der Rauschpegel im Vergleich zu einem erwarteten Signal vom eingreifenden Objekt zu groß wird und entsprechend sicherheitsgerichtet abgeschaltet werden muss.

Als Basis für das Lichtgitter dient ein modularer Aufbau. Das Lichtgitter weist beispielsweise die Komponenten auf: Optikmodul mit Sendeoptik und Empfangsoptik, Messkern mit Lichtsender und Lichtempfänger und/oder Backend mit Steuer- und Auswerteeinheit, I/O-Treibern, Businterface und/oder Sicherheitssteuerung.

Der Messkern besteht bevorzugt aus einem hochintegrierten CMOS-ASIC. Ein Aufbau aus diskreten Bauteilen ist jedoch ebenfalls möglich.

Aufgrund der guten Richtcharakteristik von Licht lassen sich so durch entsprechende Optikmodule verschiedene Varianten des Lichtgitters mit unterschiedlichen Öffnungswinkeln und Reichweiten realisieren, welche auf verschiedene Anforderungen unterschiedlicher Anwendungen angepasst sind.

Gemäß der Erfindung können Lichtsender und Lichtempfänger ohne Sendeoptik und Empfangsoptik betrieben werden, wodurch ein großer Öffnungswinkel und eine geringe Reichweite erreicht wird. Jedoch können die Lichtstrahlen auch durch optische Elemente kollimiert oder weiter aufgeweitet werden.

Zur Einschränkung des Fremdlichteinfalls kann der Lichtempfänger mit einem Filterelement, beispielsweise mit einem Bandpassfilter versehen werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis 5: einen Lichttaster eines erfindungsgemäßen Lichtgitters;
- Figur 6: ein Lichtgitter mit Referenzfläche;
- Figur 7 bis 9: ein Lichtgitter;
- Figur 10 bis 12: jeweils Lichtgitter mit Retroreflektor.
- Figur 13: ein Lichtempfänger mit einem Einzelphotonenlawinendioden-Array;
- Figur 14: ein Lichttaster;

In den nachfolgenden Figuren sind identische Teile mit identischen Bezugszeichen versehen.

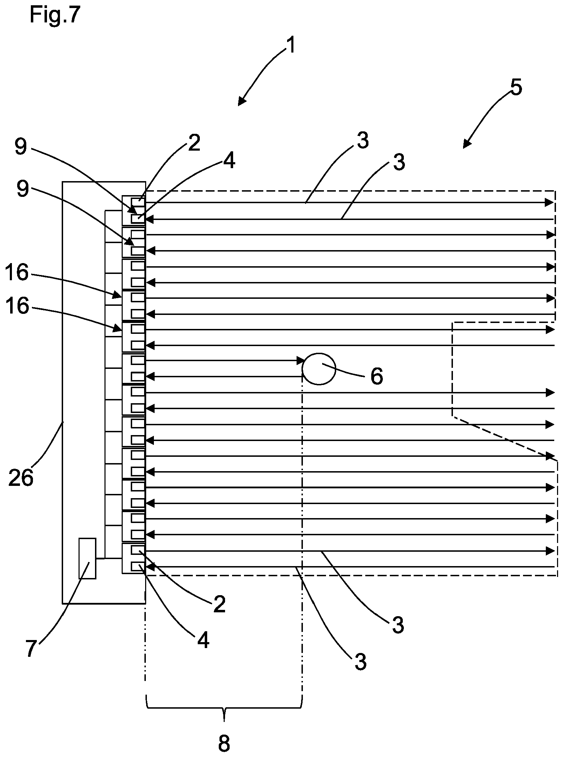

Figur 7 zeigt ein Lichtgitter 1 nach dem Lichtlaufzeitprinzip mit mindestens einem Lichtsender 2, der Lichtsignale bzw. aufeinanderfolgende Lichtimpulse 3 in einen Messbereich 5 aussendet und mit mindestens einem Lichtempfänger 4, welcher die aus dem Messbereich zurückgeworfenen Lichtsignale bzw. Lichtimpulse 3 aufnimmt und in Form von elektrischen Empfangssignalen einer Steuer- und Auswerteeinheit 7 zuführt, die unter Berücksichtigung der Lichtgeschwindigkeit aus der Zeit zwischen Aussendung und Empfang der Lichtsignale bzw. Lichtimpulse 3 ein für den Abstand 8 von Objekten 6 zum Lichtgitter 1 repräsentatives Abstandssignal ermittelt, wobei der Lichtempfänger 4 mindestens eine Einzelphotonenlawinendiode 9 aufweist.

Das Lichtgitter 1 weist ein Gehäuse 26 auf und mehrere Lichttaster 16 sind über Verbindungsleitungen miteinander verbunden.

Zur Entfernungsmessung sind verschiedene Lichtlaufzeitverfahren mit einer entsprechenden Auswertung implementierbar.

Es kann ein Pulsverfahren vorgesehen sein. Weiter kann ein CW-Verfahren (Continuous Wave) bzw. das synonyme Dauerstrich-Verfahren eingesetzt werden, wobei ein zeitlich konstantes Lichtsignal eingesetzt wird.

Weiter können analoge Signale der Einzelphotonenlawinendiode 9 ausgewertet werden. Diese werden mit einem Schwellwert verglichen, werden gesampelt oder werden mit statistischen Methoden ausgewertet.

Bei der Auswertung nach dem Lichtlaufzeitverfahren, kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung.

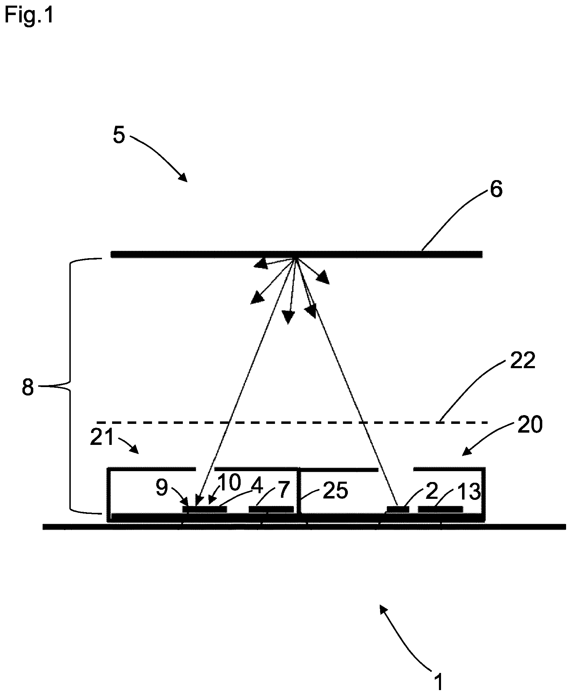

Der Lichtsender 2 ist dabei gemäß Figur 1 optional in einer ersten Gehäusekammer 20 angeordnet und der Lichtempfänger 4 in einer zweiten benachbarten Gehäusekammer 21 angeordnet. Die Gehäusekammern 20 und 21 sind optisch isoliert durch eine Kanaltrennung 25, so dass keine direkte optische Verbindung zwischen Lichtsender 2 und Lichtempfänger 4 vorhanden ist. Lediglich an einem Objekt 6 reflektiertes bzw. remittiertes Licht des Lichtsenders 2 gelangt auf den Lichtempfänger 4.

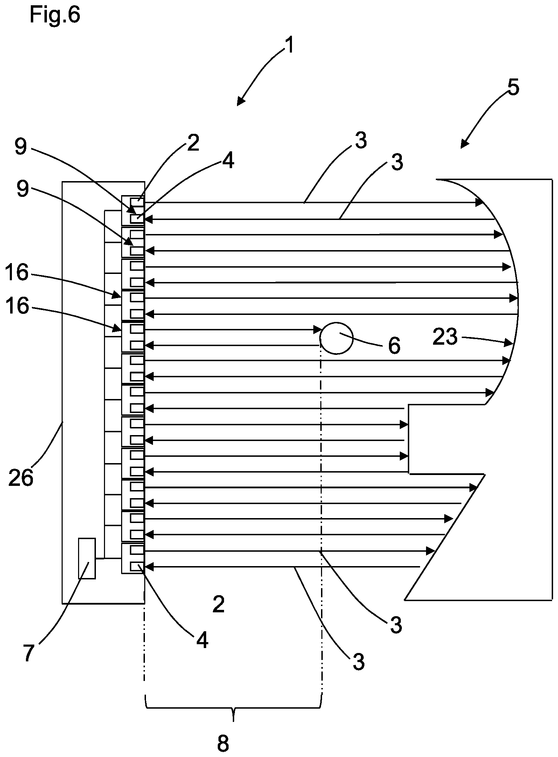

Gemäß Figur 6 ist eine Referenzfläche 23 vorgesehen, wobei die Lichtimpulse 3 des Lichtsenders 2 auf die Referenzfläche 23 treffen und die zurückgeworfenen Lichtimpulse 3 auf den Lichtempfänger 4 treffen.

Das Lichtgitter 1 muss nur an einer Seite des Messbereichs 5 bzw. Schutzfeldes angeordnet und verkabelt werden. Jeder aus einem Lichtsender 2 und Lichtempfänger 4 bestehende Messkanal bzw. Lichttaster 16 misst über die Lichtlaufzeit den Abstand 8 zu einem möglichen Objekt 6 sowie optional die Signalamplitude, welche von diesem zurückgestreut wird.

Die Schutzfelddimensionen bzw. Messbereichsdimensionen können auf zwei Arten definiert werden.

Erstens können, wie in Figur 6 dargestellt, die Abstände und Signalamplituden gegenüber einer bereits vorhandenen Referenzfläche 23 eingelernt werden. Hierbei misst das Lichtgitter 1 gegenüber diesen eingelernten Werten jede Abweichung, nämlich zu große oder zu kleine Abstände, oder zu große oder zu kleine Signalamplituden führen zu einer Schutzfeldverletzung und zu einem Objektfeststellungssignal.

Eine sicherheitsgerichtete Testung des Lichtgitters 1 ist einfacher, da beim Messwert mit zwei unterschiedlichen Erwartungswerten gearbeitet wird. Jegliche Abweichung durch eine Fehlmessung oder einen Umgebungseinfluss des Lichtgitters 1, beispielsweise Alterung des Lichtsenders 2, Fremdlichteinfluss und/oder Verschmutzung führt zu einem abweichenden Messwert entweder bei der Überwachung der Amplitude oder des Abstandes.

Zweitens können, wie in Figur 7 dargestellt, die Abstände für jeden Messkanal mit einer entsprechenden Software konfiguriert werden. Hierbei misst das Lichtgitter 1 freitastend in den Raum und jedes Unterschreiten des konfigurierten Abstandswertes führt zu einer Schutzfeldverletzung. Dabei lassen sich variable Schutzfeldgeometrien, welche beispielsweise in Figur 7 gestrichelt dargestellt sind, verwirklichen, welche auch durch Schutzfeldumschaltung, beispielsweise Muting oder Blanking z. B. in einem Taktbetrieb verändert werden können. Die sicherheitsgerichtete Sensortestung ist in diesem Fall schwieriger, da nicht von Erwartungswerten ausgegangen werden kann.

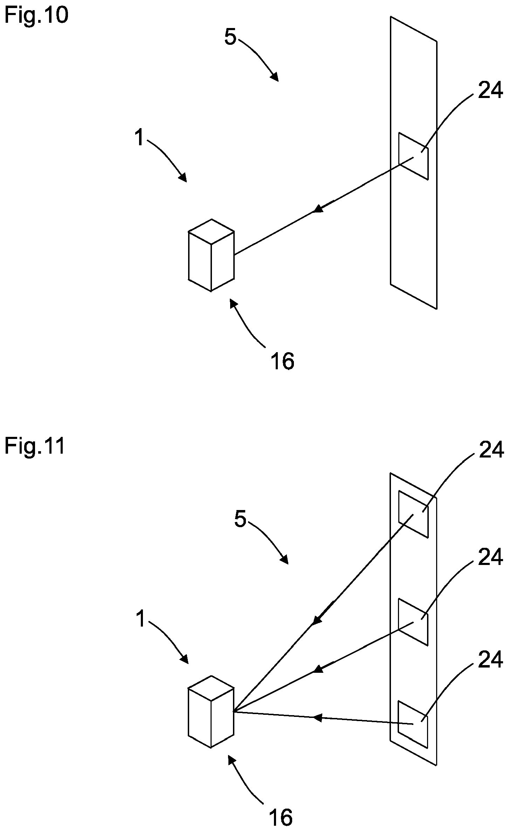

Gemäß Figur 10 und Figur 11 ist eine Retroreflektorfläche 24 vorgesehen, wobei die Lichtimpulse 3 des Lichtsenders 2 auf die Retroreflektorfläche 24 treffen und die zurückgeworfenen Lichtimpulse 3 auf den Lichtempfänger 4 treffen.

Mindestens ein Lichttaster 16, bestehend aus einem Lichtempfänger 4 und einem Lichtsender 2 werden dabei auf einer Seite des Überwachungsbereichs, bzw. Schutzfeldes bzw. Messbereichs 5 angeordnet. Auf der gegenüberliegenden Seite wird der Retroreflektor 24 angeordnet. Der Retroreflektor 24 ist beispielsweise ein Trippelreflektor. Der Retroreflektor 24 weist beispielsweise eine Abmessung von ca. 80 mm x 80 mm auf. Jedoch sind auch andere Geometrien und Abmessungen denkbar.

Bei geeigneten Öffnungswinkeln des Lichtsenders 2 und des Lichtempfängers 4 des Lichttasters 16 ist dabei auch die gleichzeitige Überwachung mehrerer Retroreflektoren 24 mit einem Lichttaster 16 möglich.

Da das zurückgestreute Lichtsignal eines Retroreflektors 24 in der Regel deutlich höher ist als das von der sonstigen Umgebung remittierte Licht, können Lichtsender 2 und/oder Lichtempfänger 4 ohne zusätzliche Kollimationsoptik betrieben werden. Insbesondere für größere Reichweiten und zur Verbesserung des Messverhaltens bei Fremdlicht können die Öffnungswinkel von Lichtsender 2 und Lichtempfänger 4 durch zusätzliche Optiken eingeschränkt werden.

Der Abstand zum Retroreflektor 24 sowie der am Lichtempfänger 4 gemessene Signalpegel werden beispielsweise bei der Inbetriebnahme eingelernt.

Durch kurze Unterbrechungen des Messzyklus ist es möglich, mittels des Lichtempfängers 4 auch einen Pegel durch Fremdlichteinstrahlung zu bestimmen. Dabei können bei der Messung des Signalpegels Schwankungen auf längere Zeitskalen, beispielsweise durch Temperaturänderungen oder durch Veränderungen des Umgebungslichts kontinuierlich protokolliert und die Sollwerte entsprechend abgeglichen werden.

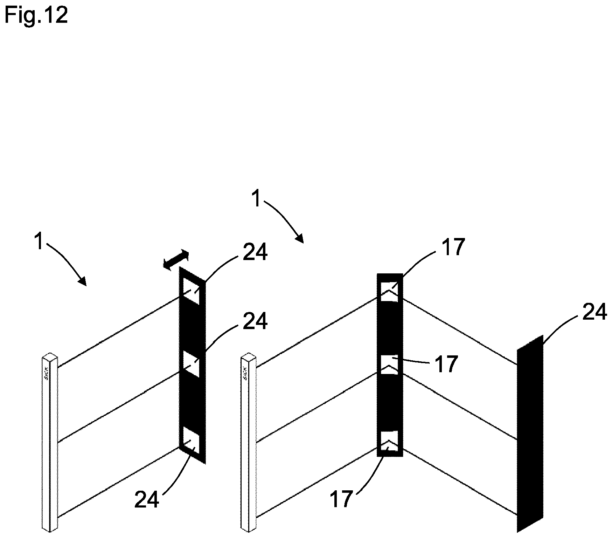

Beispielsweise ist bei dem Lichtgitter 1 gemäß Figur 12 jedem Lichttaster 16 gegenüberliegend ein Retroreflektor 24 zugeordnet. Der Retroreflektor 24 kann dabei auch beweglich angeordnet sein, beispielsweise an einem Schiebetor. Die Detektion von Objekten 6 ist weiterhin möglich, solange die Bewegung des Retroreflektors 24 wesentlich langsamer ist als typische Objektbewegungen, die detektiert werden sollen.

Weiter können gemäß Figur 12 auch Umlenkspiegel 17 zwischen Lichttaster 16 bzw. Lichtgitter 1 und Retroreflektor 24 angeordnet werden, um Überwachungsbereiche über eine oder mehrere Ecken zu realisieren.

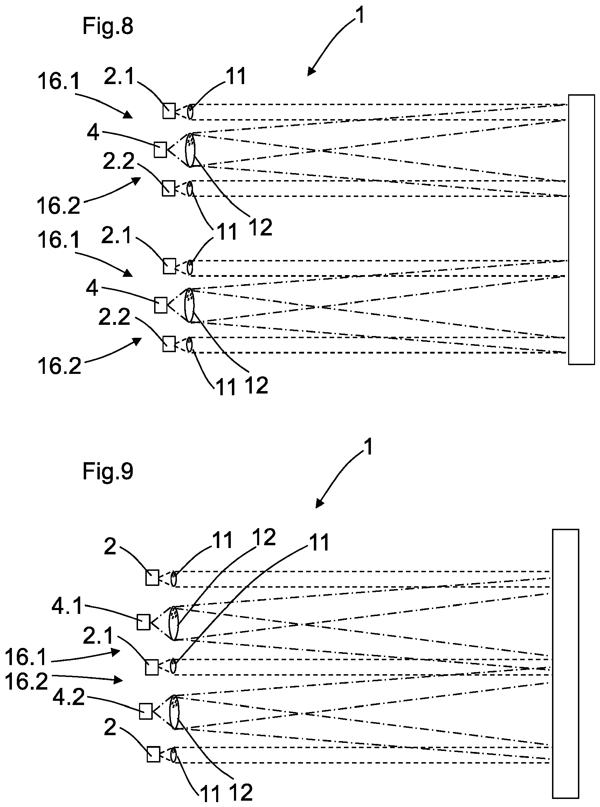

Gemäß Figur 8 bilden ein erster Lichtempfänger 4 mit einem ersten Lichtsender 2.1 einen ersten Lichttaster 16.1 und der erste Lichtempfänger 4 mit einem zweiten Lichtsender 2.2 einen zweiten Lichttaster 16.2, wobei der erste Lichtsender 2.1 und der zweite Lichtsender 2.2 nacheinander aktivierbar sind. Die Empfangskeule des Lichtempfängers 4 deckt dabei beide Lichtsender 2.1 und 2.2 ab.

Bei dem erfindungsgemäßen tastenden Lichtgitter 1 wird der Abstand der kollimierten Lichtsender 2 zur Definition der geometrischen Auflösung verwendet.

Gemäß Figur 9 bilden ein erster Lichtempfänger 4.1 mit einem ersten Lichtsender 2.1 einen ersten Lichttaster 16.1 und ein zweiter Lichtempfänger 4.2 mit dem ersten Lichtsender 2.1 einen zweiten Lichttaster 16.2.

In einer weiteren Ausführungsform sind mehrere, nicht benachbarte Lichtsender 2 gleichzeitig aktivierbar.

Um eine niedrige Ansprechzeit zu erreichen, können mehrere Lichttaster 16 parallel betrieben werden, bevorzugt in einer Anordnung ohne Überlappung von Sendekeulen bzw. Empfangskeulen. Beispielsweise werden beabstandete Lichttaster 16 mit einem Abstand von z. B. 5 bis 10 Lichttastern gleichzeitig aktiviert. Ein direkt benachbarter Lichttaster 16 wird in einem Zeitmultiplexbetrieb danach aktiviert. Innerhalb örtlicher Gruppen wird also in einem Zeitmultiplex jede Abstandsmesseinheit nacheinander durchgemessen. Hierdurch wird erreicht, dass mit zunehmender Länge eines Lichtgitters 1 die Ansprechzeit niedrig bleibt.

Optional weisen unterschiedliche Lichtsender 2 unterschiedliche Frequenzen oder unterschiedliche Phasen auf.

Durch die Überwachung von sowohl Abstandswert als auch Signalpegel können Phasenlage-Verfahren auch jenseits des Eindeutigkeitsbereichs verwendet werden, solange eine energetische Detektion des Retroreflektors 24 möglich ist.

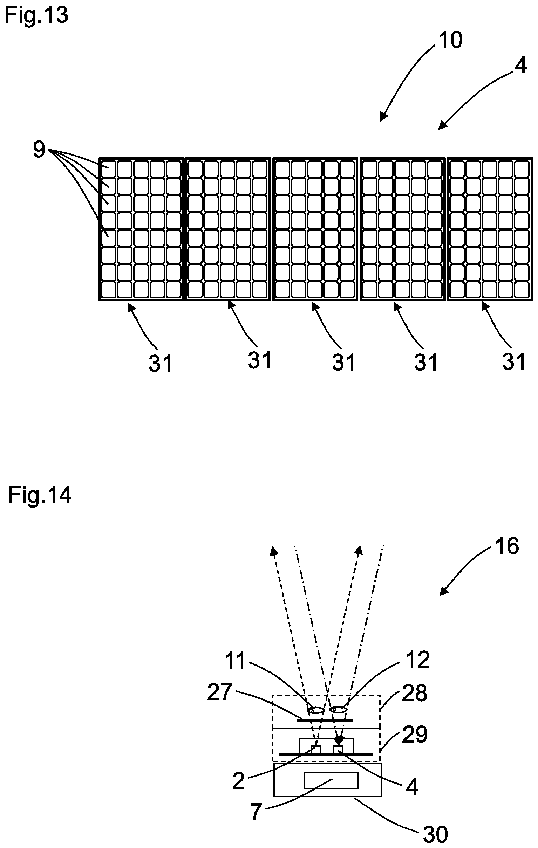

Optional weist der Lichtempfänger 4, wie in Figur 13 dargestellt, mindestens ein Array 10 bestehend aus Einzelphotonenlawinendioden 9 auf.

Um die Möglichkeit eines größeren Winkelbereichs durch das Lichtgitter 1 abzudecken und dennoch die nötige räumliche Auflösung zur Detektion z. B. eines Beines zu erhalten, kann das Einzelphotonenlawinendioden-Array 10 in sogenannte Makropixel 31 aufgeteilt werden. Hierbei sind mehrere räumlich benachbarte Einzelphotonenlawinendioden-Zellen einer gemeinsamen Auswertung zugehörig und werten über eine entsprechende Optik das empfangene Licht aus einem bestimmten Winkelbereich aus. Die Anordnung kann dabei linear oder flächig erfolgen.

Eine Dynamik und/oder ein Fremdlichtverhalten ist über die verschiedenen Einzelphotonenlawinendioden 9 bzw. Einzelphotonenlawinendioden-Array 10 skalierbar.

Der Signalpegel kann bei Einzelphotonenlawinendioden-Arrays 10 entweder direkt über die Zählraten der Photonen bestimmt werden, falls die Signale direkt auf Pixelebene digitalisiert werden oder über die Messung der Amplitude des Summenstroms aller Pixel. Im Überwachungszustand werden beide Werte kontinuierlich gemessen und mit dem eingelernten Sollwert verglichen. Treten bei einem der beiden Werte Abweichungen auf, wird diese Abweichung über den zweiten Messwert plausibilisiert und gegebenenfalls als Eingriff detektiert.

In einer Ausführungsform der Erfindung gemäß Figur 14 ist dem Lichtsender 2 eine Sendeoptik 11, insbesondere eine Linse, vorgeordnet. Die Sendeoptik 11 ist optional auf einem Chip oder in dem Chipgehäuse integriert, um eine kostengünstige und kompakte Lösung, insbesondere bei hohen Stückzahlen, zu erreichen.

Durch unterschiedliche Sendeoptiken 11 können verschiedene Überwachungswinkel und verschiedene Reichweiten realisiert werden.

In einer weiteren Ausführungsform gemäß Figur 14 ist dem Lichtempfänger 4 eine Empfangsoptik 12, insbesondere eine Linse, vorgeordnet.

Die Empfangsoptik 12 ist optional auf einem Chip oder in dem Chipgehäuse integriert.

Auch ein optischer Bandpassfilter 27 kann direkt auf dem Chip oder dem Lichtempfänger 4 angeordnet, insbesondere aufgedampft werden, um Hintergrundlicht abzuschwächen.

Durch unterschiedliche Empfangsoptiken 12 können verschiedene Überwachungswinkel und verschiedene Reichweiten realisiert werden.

Gemäß Figur 1 ist ein weiterer Lichtempfänger als Referenzlichtempfänger 13 als zweiter Empfangskanal zur sicherheitsgerichteten Selbsttestung vorgesehen.

Der Referenzlichtempfänger 13 ist in derselben Gehäusekammer 20 angeordnet wie der Lichtsender 2 und ist durch eine Kanaltrennung 25 vom Lichtempfänger 4 getrennt. Der Referenzlichtempfänger 13 kann dabei identisch wie der Lichtempfänger 4 ausgebildet sein. Insbesondere kann es sich bei dem Referenzlichtempfänger 13 um ein Einzelphotonenlawinendioden-Array 10 handeln.

Der Referenzlichtempfänger 13 ermöglicht folgende Selbsttestungen.

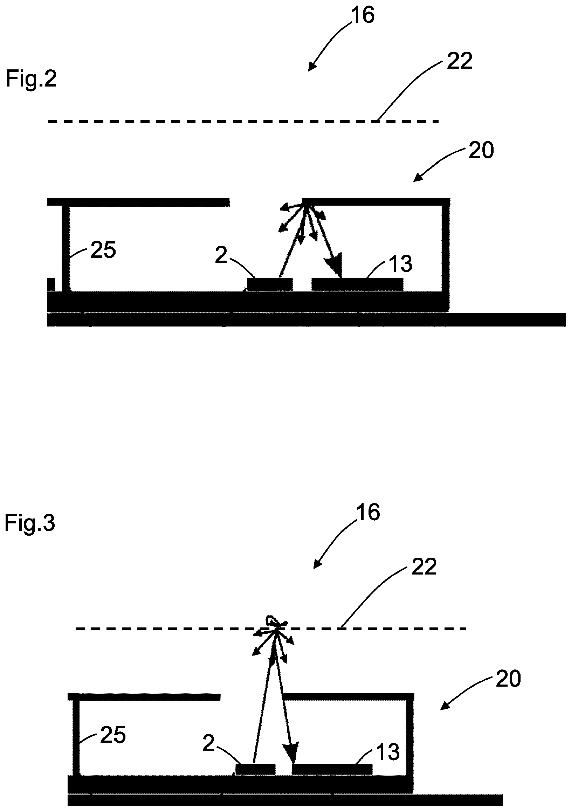

Erstens kann über Streulicht, wie Figur 2 dargestellt, innerhalb der Gehäusekammer 20 des Lichttasters 16 im Referenzlichtempfänger 13 die Leistung, insbesondere Laserleistung des Lichtsenders 2, in jedem Messzyklus überwacht werden. Große Abweichungen oder ein Ausfall des Lichtsenders 2 können so erkannt werden.

Zweitens kann das genaue Zeitverhalten bzw. Timing des Lichtsenders 2 überwacht werden und eventuell auftretende Offsets können korrigiert werden, z. B. bei Temperatureinflüssen.

Drittens kann, wie in Figur 3 dargestellt, eine verschmutzte Frontscheibe 22 des Lichtgitters 1 über eine Änderung des Frontscheibenechos durch Rückstreuung an den Schmutzpartikeln auf der Frontscheibe 22 detektiert werden.

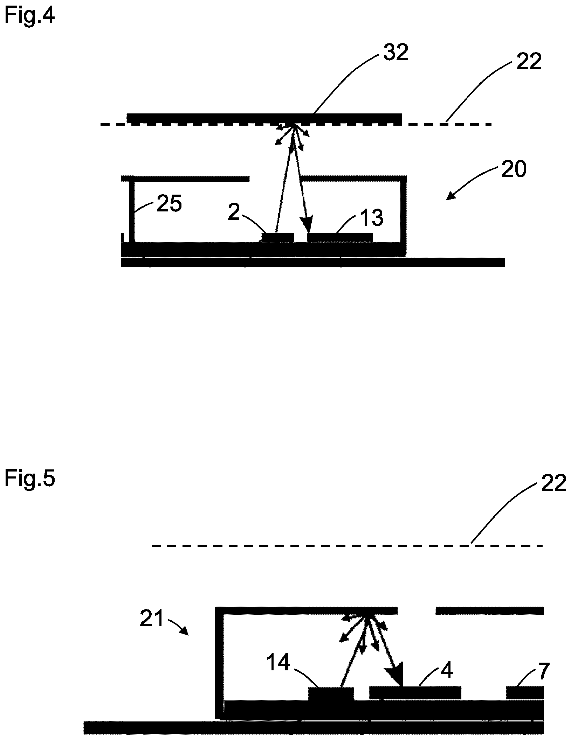

Viertens sind, wie in Figur 4 dargestellt, Manipulationsversuche beispielsweise mittels eines Manipulationsobjektes 32 ebenfalls über die Rückstreuung zum Referenzlichtempfänger 13 erkennbar, auch wenn der Lichtempfänger 4 kein Signal erhält.

Fünftens kann in den Phasen, in denen kein Licht ausgesendet wird, an dem Referenzlichtempfänger 13 der Fremdlichtpegel gemessen werden. Das entsprechende Messsignal kann mit dem Signal des Lichtempfängers 4 verglichen werden, wodurch die Sensitivität des Lichtempfängers 4 verifiziert werden kann und mit optionaler anderer Skalierung zur Überprüfung des nötigen Signal-Rausch-Abstandes im eigentlichen Messkanal herangezogen werden.

Zusätzliche Messwerte, welche auf dem Lichtempfänger 4 und dem Referenzlichtempfänger 13 erzeugt werden, erlauben eine sicherheitstechnische Bewertung der Funktionstüchtigkeit.

Eine direkte Messung des Fremdlichtpegels auf dem Lichtempfänger 4 und ggf. auf dem Referenzlichtempfänger 13 ermöglicht eine gute Bestimmung des Signal-Rausch-Verhältnisses und eine sicherheitsgerichtete Empfindlichkeit des Systems.

Gemäß Figur 5 ist ein weiterer Lichtsender als Referenzlichtsender 14 zur sicherheitsgerichteten Selbsttestung vorgesehen.

Der Referenzlichtsender 14 kann zur Testung des Lichtempfängers 4 in der Gehäusekammer 21 des Lichtempfängers 4 integriert werden. Hierdurch kann eine Testung des Empfangskanals auf das Zeitverhalten bzw. Timing sowie signalhöhenabhängige Effekte durchgeführt werden. Der Referenzlichtsender 14 ist hier bevorzugt nahe am Lichtempfänger 4 angebracht und kann beispielsweise ebenfalls in CMOS integriert werden.

Aufgrund der räumlichen Nähe lässt sich der zusätzliche Referenzlichtsender 14 mit einem leistungsschwächeren und damit kostengünstigeren Lichtsender 2 realisieren. Die Sendeleistung des Referenzlichtsenders 14 wird so eingestellt, dass die Signalhöhe den tatsächlichen Empfangssignalen des Lichtempfängers 4 entspricht. Gleiches gilt für den zeitlichen Verlauf des Sendesignals des Referenzlichtsenders 14.

Zur Testung des Lichtempfängers 4 können optische Testpulse mit unterschiedlichen zeitlichen Verläufen und Amplituden verwendet werden und über ein steuerbares Delay relativ zum Startzeitpunkt der Messung eine Lichtlaufzeit imitiert werden.

Insbesondere Übersteuerungsmessungen lassen sich auf diese Art leicht durchführen. Über eine programmierbare variable Verzögerung vor dem Lichtsender 2 lässt sich das Zeitverhalten, also das Timing der Entfernungsmesskette testen.

Über eine einstellbare Signalhöhe des Lichtsenders 2 lässt sich die Dynamik des Lichtempfängers 4 testen. Der Referenzlichtsender 14 lässt sich mit einer leistungsschwächeren und damit kostengünstigeren Sendediode aufbauen, da aufgrund der räumlichen Nähe eine geringere Sendeleistung ausreicht, um vergleichbare Signale auf dem Lichtempfänger zu erzeugen. Der Referenzlichtsender 14 kann ebenfalls in CMOS-Technologie integriert werden.

Damit ermöglicht der Referenzlichtsender 14 folgende Testungen:
Erstens kann eine Linearität und eine Integrität der Empfangssignale des Lichtempfängers 4 für verschiedene Verzögerungen bzw. Lichtlaufzeiten gewährleistet werden. Damit kann indirekt die Abstandsmessung überprüft werden.

Zweitens kann durch Messung der Signalhöhe mit unterschiedlichen Referenzamplituden die Dynamik und die Sensitivität des Lichtempfängers 4 überprüft werden. Die Messungen können auch zur Kompensation von Alterungseffekten oder Degradation oder zur Kompensation von Temperatureffekten verwendet werden.

Drittens können z. B. bei Bedarf Übersteuerungsmessungen durchgeführt werden.

Optional ist die Steuer- und Auswerteeinheit 7 zweikanalig ausgebildet.

Durch die zweikanalige Steuer- und Auswerteeinheit 7 kann das Lichtgitter 1 als eigenständiger Sicherheitssensor bzw. Sicherheitslichtgitter verwendet werden.

Dadurch ist das Lichtgitter 1 selbst in der Lage, eine Vielzahl von Selbsttests durchzuführen und seine eigene Funktionalität umfassend sicher zu stellen.

Weiter können aber auch mehrere Lichttaster 16 über einen gemeinsamen Bus kommunizieren und ein zentraler Sicherheitskontroller bzw. Safetycontroller wird verwendet, um die einzelnen Lichttaster 16 zu konfigurieren, ihren Zustand abzufragen und gegebenenfalls geeignete Testsignale einzuspeisen, die empfangenen Signale auszuwerten und abzugleichen, Warnungen zu signalisieren und im Gefährdungsfall eine abzusichernde Maschine in einen sicheren Zustand zu überführen.

Optional ist ein Lagesensor zur Auswertung der Sensorlage des Lichtgitters 1 vorgesehen. Insbesondere ist eine sicherheitsrelevante Ausrichtung des Lichtgitters 1 vorgesehen.

Ist das Lichtgitter 1 vom Anwender positioniert und überwacht den gewünschten Bereich, kann es notwendig sein, diese Position des Überwachungsbereichs zu kontrollieren, um z. B. eine Dejustage des Lichtgitters 1 durch mechanische Einwirkungen zu erkennen.

Nachdem die Position einmal eingelernt wurde, erkennt der Lagesensor jede Veränderung und ein nachgeschalteter Sicherheitskontroller bzw. Safetycontroller bzw. eine nachgeschaltete Sicherheitssteuerung wertet die Positionssignale aus, falls sich durch eine Dejustage ein Sicherheitsproblem ergibt.

Zudem kann der Lagesensor als Ausrichthilfe bzw. elektronische Wasserwaage dienen, was insbesondere bei der Justage eines Sensorsystems bzw. Lichtgitters 1 hilfreich ist.

Optional ist der Lichttaster ein integriertes Lichttastermodul.

Als Basis für das Lichtgitter 1 dient ein modularer Aufbau gemäß Figur 14. Das Lichtgitter 1 weist beispielsweise die Komponenten auf: Optikmodul 28 mit Sendeoptiken 11 und Empfangsoptiken 12, Messkern 29 mit Lichtsendern 2 und Lichtempfängern 4 und/oder Backend 30 mit Steuer- und Auswerteeinheit 7, I/O-Treibern, Businterface und/oder Sicherheitssteuerung.

Der Messkern 29 besteht bevorzugt aus einem hochintegrierten CMOS-ASIC. Ein Aufbau aus diskreten Bauteilen ist jedoch ebenfalls möglich.

Aufgrund der guten Richtcharakteristik von Licht lassen sich so durch entsprechende Optikmodule 28 verschiedene Varianten des Lichtgitters 1 mit unterschiedlichen Öffnungswinkeln und Reichweiten realisieren, welche auf verschiedene Anforderungen unterschiedlicher Anwendungen angepasst sind.

Gemäß Figur 1 können Lichtsender 2 und Lichtempfänger 4 ohne Sendeoptik und Empfangsoptik betrieben werden, wodurch ein großer Öffnungswinkel und eine geringe Reichweite erreicht wird. Jedoch können die Lichtstrahlen auch durch optische Elemente kollimiert oder weiter aufgeweitet werden.

Zur Einschränkung des Fremdlichteinfalls kann der Lichtempfänger 4 mit einem Filterelement, beispielsweise mit einem Bandpassfilter 27 versehen werden, wie in Figur 14 dargestellt.

Bezugszeichen:
1 Lichtgitter
2 Lichtsender
3 Lichtimpulse
4 Lichtempfänger
5 Messbereich
6 Objekt
7 Steuer- und Auswerteeinheit
8 Abstand
9 Einzelphotonenlawinendioden
10 Array
11 Sendeoptik
12 Empfangsoptik
13 Referenzlichtempfänger
14 Referenzlichtsender
15 Gehäuse
16 Lichttaster
17 Umlenkspiegel
20 erste Gehäusekammer
21 zweite Gehäusekammer
22 Frontscheibe
23 Referenzfläche
24 Retroreflektor
25 Kanaltrennung
26 Gehäuse
27 Bandpassfilter
28 Optikmodul
29 Messkern
30 Backend
31 Makropixel
32 Manipulationsobjekt

## Patentansprüche

1. Lichtgitter nach dem Lichtlaufzeitprinzip mit mindestens einem Lichtsender (2), der Lichtsignale (3) in einen Messbereich (5) aussendet und mit
- mindestens einem Lichtempfänger (4), welcher die aus dem Messbereich (5) zurückgeworfenen Lichtsignale (3) aufnimmt und in Form von elektrischen Empfangssignalen einer Steuer- und Auswerteeinheit (7) zuführt,
- die unter Berücksichtigung der Lichtgeschwindigkeit aus der Zeit zwischen Aussendung und Empfang des Lichtsignals (3) ein für den Abstand (8) von Objekten (6) zum Lichtgitter (1) repräsentatives Abstandssignal ermittelt, wobei der Lichtempfänger (4) mindestens eine Einzelphotonenlawinendiode (9) aufweist, und wobei das Lichtgitter mehrere Lichttaster aufweist, welche aus einem Lichtsender und einem Lichtempfänger bestehen und welche in einem Gehäuse angeordnet sind.

2. Lichtgitter nach Anspruch 1, **dadurch gekennzeichnet, dass** eine Referenzfläche (23) vorgesehen ist, wobei die Lichtsignale (3) des Lichtsenders auf die Referenzfläche (23) treffen und die zurückgeworfenen Lichtsignale (3) auf den Lichtempfänger (4) treffen.

3. Lichtgitter nach Anspruch 1, **dadurch gekennzeichnet, dass** eine Retroreflektorfläche (24) vorgesehen ist, wobei die Lichtsignale (3) des Lichtsenders (2) auf die Retroreflektorfläche (24) treffen und die zurückgeworfenen Lichtsignale (3) auf den Lichtempfänger (4) treffen.

4. Lichtgitter nach einem der vorhergehenden Ansprüche, **dadurch gekennzeichnet, dass** das ein erster Lichtempfänger (4) mit einem ersten Lichtsender (2.1) einen ersten Lichttaster (16.1) bilden und der erste Lichtempfänger (4) mit einem zweiten Lichtsender (2.2) einen zweiten Lichttaster (16.2) bilden, wobei der erste Lichtsender (2.1) und der zweite Lichtsender (2.2) nacheinander aktivierbar sind.

5. Lichtgitter nach einem der vorhergehenden Ansprüche, **dadurch gekennzeichnet, dass** ein erster Lichtempfänger (4) mit einem ersten Lichtsender (2.1) einen ersten Lichttaster (16.1) bilden und ein zweiter Lichtempfänger (4.1) mit dem ersten Lichtsender (2.1) einen zweiten Lichttaster (16.1) bilden.

6. Lichtgitter nach einem der vorhergehenden Ansprüche, **dadurch gekennzeichnet, dass** mehrere, nicht benachbarte Lichtsender (2) gleichzeitig aktivierbar sind.

7. Lichtgitter nach einem der vorhergehenden Ansprüche, **dadurch gekennzeichnet, dass** unterschiedliche Lichtsender (2) unterschiedliche Pulswiederholfrequenzen, Modulationsfrequenzen oder unterschiedliche Phasen aufweisen.

8. Lichtgitter nach einem der vorhergehenden Ansprüche, **dadurch gekennzeichnet, dass** der Lichtempfänger (4) mindestens ein Array (10) bestehend aus Einzelphotonenlawinendioden (9) aufweist.

9. Lichtgitter nach einem der vorhergehenden Ansprüche, **dadurch gekennzeichnet, dass** dem Lichtsender (2) eine Sendeoptik (11), insbesondere eine Linse, vorgeordnet ist.

10. Lichtgitter nach einem der vorhergehenden Ansprüche, **dadurch gekennzeichnet, dass** dem Lichtempfänger (4) eine Empfangsoptik (12), insbesondere eine Linse, vorgeordnet ist.

11. Lichtgitter nach einem der vorhergehenden Ansprüche, **dadurch gekennzeichnet, dass** ein weiterer Lichtempfänger (4) als Referenzlichtempfänger (13) als zweiter Empfangskanal zur sicherheitsgerichteten Selbsttestung vorgesehen ist.

12. Lichtgitter nach einem der vorhergehenden Ansprüche, **dadurch gekennzeichnet, dass** ein weiterer Lichtsender als Referenzlichtsender (14) zur sicherheitsgerichteten Selbsttestung vorgesehen ist.

13. Lichtgitter nach einem der vorhergehenden Ansprüche, **dadurch gekennzeichnet, dass** die Steuer- und Auswerteeinheit (7) zweikanalig ausgebildet ist.

14. Lichtgitter nach einem der vorhergehenden Ansprüche, **dadurch gekennzeichnet, dass** ein Lagesensor zur Auswertung der Sensorlage des Lichtgitters vorgesehen ist.

## Claims

1. A light grid in accordance with the time of flight principle having at least one light transmitter (2) which transmits light signals (3) into a measured zone (5), and having
- at least one light receiver (4) which receives the light signals (3) reflected from the measured zone (5) and supplies them in the form of received electrical signals to a control and evaluation unit (7);
- which determines a distance signal representative of the distance (8) of objects (6) from the light grid (1) from the time between the transmission and the reception of the light signal (3) while taking account of the speed of light,
wherein
the light receiver (4) has at least one single photon avalanche diode (9); and wherein the light grid has a plurality of light scanners which are composed of a light transmitter and a light receiver and which are arranged in a housing.

2. A light grid in accordance with claim 1, **characterized in that** a reference surface (23) is provided, with the light signals (3) of the light transmitter being incident on the reference surface (23) and the reflected light signals (3) being incident on the light receiver (4).

3. A light grid in accordance with claim 1, **characterized in that** a retroreflector surface (24) is provided, with the light signals (3) of the light transmitter (2) being incident on the retroreflector surface (24) and the reflected light signals (3) being incident on the light receiver (4).

4. A light grid in accordance with any one of the preceding claims, **characterized in that** a first light receiver (4) forms a first light scanner (16.1) with a first light transmitter (2.1) and the first light receiver (4) forms a second light scanner (16.2) with a second light transmitter (2.2), with the first light transmitter (2.1) and the second light transmitter (2.2) being able to be activated one after the other.

5. A light grid in accordance with any one of the preceding claims, **characterized in that** a first light receiver (4) forms a first light scanner (16.1) with a first light transmitter (2.1) and a second light receiver (4.1) forms a second light scanner (16.1) with the first light transmitter (2.1).

6. A light grid in accordance with any one of the preceding claims, **characterized in that** a plurality of non-adjacent light transmitters (2) can be activated simultaneously.

7. A light grid in accordance with any one of the preceding claims, **characterized in that** different light transmitters (2) have different pulse repetition frequencies, modulation frequencies or different phases.

8. A light grid in accordance with any one of the preceding claims, **characterized in that** the light receiver (4) has at least one array (10) comprising single photon avalanche diodes (9).

9. A light grid in accordance with any one of the preceding claims, **characterized in that** a transmission optics (11), in particular a lens, is arranged in front of the light transmitter (2).

10. A light grid in accordance with any one of the preceding claims, **characterized in that** a reception optics (12), in particular a lens, is arranged in front of the light receiver (4).

11. A light grid in accordance with any one of the preceding claims, **characterized in that** a further light receiver (4) is provided as a reference light receiver (13) as a second reception channel for a safety-relevant self-test.

12. A light grid in accordance with any one of the preceding claims, **characterized in that** a further light transmitter is provided as a reference light transmitter (14) for the safety-relevant self-test.

13. A light grid in accordance with any one of the preceding claims, **characterized in that** the control and evaluation unit (7) is configured with two channels.

14. A light grid in accordance with any one of the preceding claims, **characterized in that** a positional sensor is provided for evaluating the sensor position of the light grid.

## Revendications

1. Grille lumineuse selon le principe du temps de parcours de lumière, comportant au moins un émetteur de lumière (2) qui émet des signaux lumineux (3) dans une zone de mesure (5), et comportant
- au moins un récepteur de lumière (4) qui reçoit les signaux lumineux (3) renvoyés de la zone de mesure (5) et qui les amène à une unité de commande et d'évaluation (7) sous forme de signaux de réception électriques,
- qui détermine un signal de distance (8) représentatif de la distance (8) d'objets (6) par rapport à la grille lumineuse (1) à partir du temps s'écoulant entre l'émission et la réception du signal lumineux (3), en prenant en compte la vitesse de la lumière,
dans laquelle
le récepteur de lumière (4) présente au moins une diode à avalanche à photon unique (9),
et la grille lumineuse présente plusieurs détecteurs photoélectriques qui sont constitués par un émetteur de lumière et par un récepteur de lumière et qui sont agencés dans un boîtier.

2. Grille lumineuse selon la revendication 1, **caractérisée en ce que** il est prévu une surface de référence (23), les signaux lumineux (3) de l'émetteur de lumière tombant sur la surface de référence (23) et les signaux lumineux renvoyés (3) tombant sur le récepteur de lumière (4).

3. Grille lumineuse selon la revendication 1, **caractérisée en ce que** il est prévu une surface rétro-réfléchissante (24), les signaux lumineux (3) de l'émetteur de lumière (2) tombant sur la surface rétro-réfléchissante (24) et les signaux lumineux renvoyés (3) tombant sur le récepteur de lumière (4).

4. Grille lumineuse selon l'une des revendications précédentes, **caractérisée en ce que** un premier récepteur de lumière (4) constitue un premier détecteur photoélectrique (16.1) avec un premier émetteur de lumière (2.1), et le premier récepteur de lumière (4) constitue un second détecteur photoélectrique (16.2) avec un second émetteur de lumière (2.2), le premier émetteur de lumière (2.1) et le second émetteur de lumière (2.2) pouvant être activés l'un après l'autre.

5. Grille lumineuse selon l'une des revendications précédentes, **caractérisée en ce que** un premier récepteur de lumière (4) avec un premier émetteur de lumière (2.1) constitue un premier détecteur photoélectrique (16.1), et un second récepteur de lumière (4.1) avec le premier émetteur de lumière (2.1) constitue un second détecteur photoélectrique (16.1).

6. Grille lumineuse selon l'une des revendications précédentes, **caractérisée en ce que** plusieurs émetteurs de lumière (2) non voisins peuvent être activés simultanément.

7. Grille lumineuse selon l'une des revendications précédentes, **caractérisée en ce que** différents émetteurs de lumière (2) présentent différentes fréquences de répétition d'impulsions, différentes fréquences de modulation ou différentes phases.

8. Grille lumineuse selon l'une des revendications précédentes, **caractérisée en ce que** le récepteur de lumière (4) comprend au moins un réseau (10) constitué par des diodes à avalanche à photon unique (9).

9. Grille lumineuse selon l'une des revendications précédentes, **caractérisée en ce que** en amont de l'émetteur de lumière (2) est agencée une optique d'émission (11), en particulier une lentille.

10. Grille lumineuse selon l'une des revendications précédentes, **caractérisée en ce que** en amont du récepteur de lumière (4) est agencée une optique de réception (12), en particulier une lentille.

11. Grille lumineuse selon l'une des revendications précédentes, **caractérisée en ce que** il est prévu un autre récepteur de lumière (4) à titre de récepteur de lumière de référence (13) en tant que second canal de réception pour l'autocontrôle sécurisé.

12. Grille lumineuse selon l'une des revendications précédentes, **caractérisée en ce que** il est prévu un autre émetteur de lumière à titre d'émetteur de lumière de référence (14) pour l'autocontrôle sécurisé.

13. Grille lumineuse selon l'une des revendications précédentes, **caractérisée en ce que** l'unité de commande et d'évaluation (7) est réalisée avec deux canaux.

14. Grille lumineuse selon l'une des revendications précédentes, **caractérisée en ce que** il est prévu un capteur de position pour évaluer la position de la grille lumineuse.
